Europäisches Patentamt

**European Patent Office**

Office européen des brevets

(19)

(11) Numéro de publication : **0 072 807**
**B1**

(12)

# FASCICULE DE BREVET EUROPÉEN

(45) Date de publication du fascicule du brevet :
**24.04.85**

(51) Int. Cl.⁴ : **A 61 C 1/08**

(21) Numéro de dépôt : **82900210.4**

(22) Date de dépôt : **14.01.82**

(86) Numéro de dépôt international :
**PCT/CH 82/00004**

(87) Numéro de publication internationale :
**WO/8202826 (02.09.82 Gazette 82/21)**

(54) **ELEMENT D'ACCOUPLEMENT D'UN MICRO-MOTEUR A AIR OU ELECTRIQUE A UNE PIECE A MAIN DENTAIRE.**

(30) Priorité : **27.02.81 CH 1330/81**

(43) Date de publication de la demande :
**02.03.83 Bulletin 83/09**

(45) Mention de la délivrance du brevet :
**24.04.85 Bulletin 85/17**

(84) Etats contractants désignés :
**AT DE FR GB NL SE**

(56) Documents cités :
**FR-A- 2 276 807**
**FR-A- 2 374 887**

(73) Titulaire : **MOSIMANN, David**
**13-15, chemin des Grillons**
**CH-2504 Bienne 6 (CH)**

(72) Inventeur : **MOSIMANN, David**
**13-15, chemin des Grillons**
**CH-2504 Bienne 6 (CH)**

(74) Mandataire : **Finck, Dieter et al**
**Patentanwälte v. Füner, Ebbinghaus, Finck Mariahilf-**
**platz 2 & 3**
**D-8000 München 90 (DE)**

Jouve, 18, rue St-Denis, 75001 Paris, France

EP 0 072 807 B1

## Description

L'invention concerne un élément d'accouplement d'un micromoteur pneumatique ou électrique à une pièce à main dentaire selon le système spray intégré, ledit élément étant formé d'une base servant de couvercle et de fixation à un boîtier du moteur et d'un cylindre surmontant celle-ci et destiné à être introduit et accroché dans la pièce à main, cette base et ce cylindre ayant des parois percées de conduits rectilignes d'eau et d'air de spray qui comportent des parties longitudinales situées dans la base avec une extrémité débouchant sur sa face destinée à être accolée au boîtier du moteur et autre extrémité qui communique avec des parties longitudinales correspondantes situées dans le cylindre par l'intermédiaire de conduits de liaison rectilignes percés dans la base de biais par rapport à l'axe du cylindre.

Un tel élément est connu de l'art antérieur illustré par le document FR-A-2 374 887. Celui-ci décrit un moteur miniature pour pièce à main médicale comportant un conduit intérieur d'agent de refroidissement. Ledit conduit est constitué par une section de tube reliée aux conduits dans l'élément d'accouplement par l'intermédiaire des conduits de liaison enfichables.

Tous ces conduits sont de petite dimension et s'obstruent dès lors facilement et rapidement.

Pour cette raison les conduits de liaison sont en partie disposés dans un élément de fermeture qui, après enlèvement, donne accès à la section de tube et permet son nettoyage, voire son remplacement, sans qu'on ait besoin de démonter le moteur.

Cette forme d'exécution n'est pas satisfaisante. Les parties des conduits de liaison disposées dans la base sont à peine accessibles à un outil de nettoyage, et les parties de conduits disposées dans la paroi du cylindre sont complètement inaccessibles à un outil de nettoyage. Lorsque les conduits sont obstrués, on peut toujours remplacer l'élément d'accouplement. Mais on augmente ainsi les frais d'entretien de l'instrument de façon non négligeable.

La présente invention vise la réalisation d'un élément d'accouplement plus fiable dont les conduits d'eau et d'air du spray sont, sur toute leur longueur, facilement et rapidement accessibles à un outil de nettoyage.

Dans l'élément d'accouplement selon l'invention, les parties longitudinales des conduits situées dans le cylindre et leurs conduits obliques de liaison respectifs débouchent ensemble dans des passages ménagés dans la base, lesdits passages présentent chacun dans le prolongement desdits conduits une ouverture s'ouvrant du côté de la base accolé au boîtier, et lesdites ouvertures sont obturées de manière étanche par un joint et un bouchon amovibles.

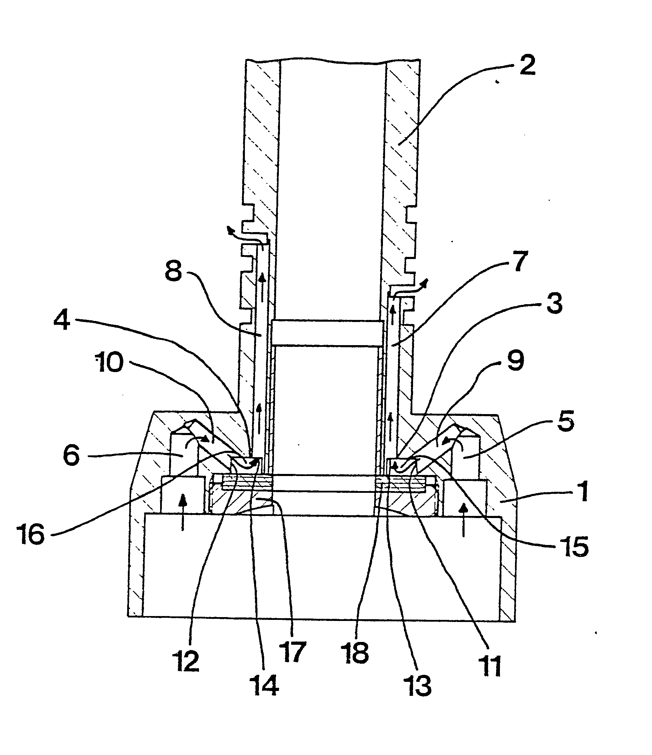

Le dessin annexé représente, à titre d'exemple, une forme d'exécution possible de l'invention.

La figure unique est une vue en coupe transversale de l'élément d'accouplement.

Les conduits 3, 4 sont ménagés dans les parois de l'élément d'accouplement s'agissant de l'exécution dite « système spray intégré ». L'eau et l'air du spray suivront, de part et d'autre, les chemins indiqués par les flèches.

L'élément d'accouplement est formé de la base 1 qui sert de couvercle et de fixation au boîtier du moteur et du cylindre 2 qui est destiné à être introduit et accroché dans la pièce à main. Il est totalement évidé mais la partie supérieure de la base 1 et la paroi du cylindre 2 présentent toutefois une réserve de matière suffisante de façon à ce qu'elles puissent contenir les conduits 3, 4.

Il est aisé de percer les parties 5, 6 des conduits 3, 4 dans la base 1 et les parties 7, 8 des conduits 3, 4 dans le cylindre 2. Pour relier les parties 5, 6 et les parties 7, 8 des conduits 3, 4, il suffit de percer en diagonale les conduits de liaison 9, 10 dans la base 1. On veillera cependant à ce que les sorties 11, 12 des conduits de liaison 9, 10 communiquent avec les entrées 13, 14 des parties 7, 8 des conduits 3, 4 en ménageant les passages 15, 16 entre lesdites entrées et sorties. Pour fermer ces passages, il suffit de mettre en place le bouchon 17, en l'occurrence une vis, muni du joint 18. La tête de la vis pourra comprendre une fente suffisamment large de façon que la vis puisse être enlevée et remise en place au moyen d'une pièce de monnaie ou pourra être prévue de façon à ce qu'elle puisse recevoir une clé de forme. D'autres variantes sont possibles.

Pour nettoyer les conduits 3, 4, il suffit de retirer la vis 17 et le joint 18 et chacune de leurs parties 5, 6, 7, 8 de même que les conduits de liaison 9, 10 deviennent facilement accessibles à un outil de nettoyage par exemple une mèche ou une sonde utilisée ordinairement par le praticien.

## Revendication

Elément d'accouplement d'un micro-moteur pneumatique ou électrique à une pièce à main dentaire selon le système spray intégré, ledit élément étant formé d'une base (1) servant de couvercle et de fixation à un boîtier du moteur et d'un cylindre (2) surmontant celle-ci et destiné à être introduit et accroché dans la pièce à main, cette base et ce cylindre ayant des parois percées de conduits rectilignes d'eau et d'air de spray (3, 4) qui comportent des parties longitudinales (5, 6) situées dans la base avec une extrémité débouchant sur sa face destinée à être accolée au boîtier du moteur et une autre extrémité qui communique avec des parties longitudinales (7, 8) correspondantes situées dans le cylindre (2) par l'intermédiaire de conduits de liaison rectilignes (9, 10) percés dans la base (1) de biais par rapport à l'axe du cylindre (2), caractérisé en ce que les parties longitudinales (7, 8) des conduits situées dans le cylindre et leurs conduits obliques de liaison (9, 10) respectifs débouchent ensemble dans des passages (15, 16) ménagés dans la base, en ce que lesdits passages présentent chacun dans le prolongement desdits conduits une ouverture s'ouvrant du côté de la base accolé au boîtier et en ce que ces ouvertures sont obturées de manière étanche par un joint (18) et un bouchon (17) amovibles.

## Claim

Coupling element for coupling a pneumatic or electric micro-motor to a dental hand tool of the integrated spray system, said element comprising a base (1) serving as cover and for attachment to a motor casing, and a cylinder (2) mounted on said base and designed to be introduced and hooked into the hand tool, this base and this cylinder having walls perforated by straight ducts for water and air spray (3, 4) which comprise longitudinal parts (5, 6) situated in the base with one end opening onto that surface of the base which is to be attached to the motor casing while another end communicates with corresponding longitudinal parts (7, 8) situated in the cylinder (2) by means of straight connecting ducts (9, 10) perforating the base (1) and arranged at a slant in relation to the axis of the cylinder (2), characterised in that the longitudinal parts (7, 8) of the ducts situated in the cylinder and their respective oblique connecting ducts (9, 10) together open into the passages (15, 16) formed in the base, in that the said passages have each, in the extension of the said ducts, an opening on the side of the base which is connected to the casing, and in that these openings are closed imperviously by a detachable joint (18) and a detachable plug (17).

## Patentanspruch

Kupplungselement zum Verbinden eines pneumatischen oder elektrischen Mikromotors mit einem Zahnbehandlungs-Handstück des integrierten Zerstäuber-Systems, wobei das Element von einer Basis (1), die zur Abdeckung und zur Befestigung an einem Motorgehäuse dient, und von einem Zylinder (2) gebildet wird, der auf dieser angeordnet und dazu vorgesehen ist, in das Handstück eingeführt und darin befestigt zu werden, wobei die Basis und der Zylinder Wände haben, die von geradlinigen Wasser- und Zerstäuberluftleitungen (3, 4) durchbohrt sind, die Längsabschnitte (5, 6) haben, die in der Basis liegen und mit einem Ende auf ihrer Seite münden, die dazu vorgesehen ist, mit dem Motorgehäuse verbunden zu werden, und mit einem anderen Ende mit den entsprechenden, in dem Zylinder (2) gelegenen Längsabschnitten (7, 8) über dazwischenliegende geradlinige Verbindungsleitungen (9, 10) verbunden sind, die bezüglich der Achse des Zylinders (2) schräg in die Basis (1) gebohrt sind, dadurch gekennzeichnet, daß die Längsabschnitte (7, 8) der im Zylinder gelegenen Leitungen und ihre entsprechenden schrägen Verbindungsleitungen (9, 10) zusammen in in der Basis angebrachten Aussparungen (15, 16) münden, daß die Aussparungen jeweils in der Verlängerung der Leitungen eine Öffnung aufweisen, die sich nach der Seite der Basis öffnet, die mit dem Gehäuse verbunden ist, und daß diese Öffnungen abdichtend mit einer abnehmbaren Dichtung (18) und einem abnehmbaren Verschluß (17) verschlossen sind.